# EUROPEAN PATENT APPLICATION

(11) **EP 1 538 377 A1**
(43) Date of publication of application: **08.06.2005**
(21) Application number: 03795357.7
(22) Date of filing: 10.09.2003
(51) Int. Cl.: F16J 15/50, B62D 1/20

(54) **HOLE COVER FOR MOTOR VEHICLE**

(30) Priority: 10.09.2002 JP 2002264232
(71) Applicant: NSK Ltd., Tokyo 141-8560 (JP)
(72) Inventor: KANAZAWA, Yasuo c/o NSK LTD., Maebashi-shi, Gunma 371-0853 (JP); YAMADA, Jun c/o NSK LTD., Maebashi-shi, Gunma 371-0853 (JP); SHIBA, Takashi c/o NSK LTD., Maebashi-shi, Gunma 371-0853 (JP)
(74) Representative: Baldwin, Mark
(86) International application number: PCT/JP2003/011550
(87) International publication number: WO 2004/025152

(57) **Abstract**

A hole cover for a vehicle, for covering an opening on a panel through which a steering element is to pass includes an elastic seal portion having a steering penetration portion through which the steering element passes and being in close contact with a sealing surface formed on the edge of the opening of the panel, and a latch member adapted to be pressed against the panel substantially along the axis of the steering element.

## Description

### Technical Field

The present invention relates to a panel hole cover for sealing a penetration portion of a steering element in a vehicle or the like, and more particularly to a technology for improving operationality in assembling.

### Background Art

In a vehicle, the steering wheel is disposed in the cabin, while the steering gear is disposed in the engine room or the like. Thus, the steering wheel and the steering gear are connected by a steering element (which will be represented by the steering shaft hereinafter) that passes through a panel called a body panel or a dash panel, or the partitioning member between the engine room and the cabin. The steering shaft is turned upon steering, and a joint or the like for connection is attached to its end portion. Accordingly, a relatively large opening (a steering opening) is formed on the panel through which the steering shaft is to be inserted. The steering opening is sealed by a hole cover made of, for example, a synthetic rubber to prevent rain water, dust and noises etc. from entering the cabin.

There are various forms of hole covers, and typical ways of mounting them are disclosed in Japanese Utility Model Application Laid-Open No. 3-121972 (which will be referred to as the first prior art hereinafter) and Japanese Patent Application Laid-Open No. 11-132328 (which will be referred to as the second prior art hereinafter). In the first prior art, the tip end portion of a hole cover made of a synthetic rubber fixed to the panel is externally fitted on a boss of the steering gear box, and then that portion is bound by a metal band so as to be secured. In the second prior art, a hole cover having the tip end portion fixed to a boss of the steering gear box is fitted into the steering opening, and a fitting member on which a guide claw and a latch claw that engage the steering opening are mounted is connected to the hole cover.

The above-described conventional hole covers suffer from various problems related, for example, to their mounting process, as described below. For example, in the hole cover of the first prior art, it is necessary to tighten a screw of the metal band as a separate part using a tool such as a screw driver. However, since the tightening site is in the narrow engine room, the operation is very difficult and takes significant time especially on the occasion of inspection or maintenance etc.. On the other hand, in the hole cover of the second prior art, the guide claw is inserted in the edge of the steering opening so as to be positioned, and then the fitting member is pushed, so that the latch claw fits into the steering opening. However, since the guide claw and the latch claw are set in the inner side of the hole cover, the operating engineer cannot see the guide claw and the latch claw during the assembling operation, and the operation is difficult.

In both the prior arts, the hole cover is connected to a boss of the steering gear box disposed below the panel, and when the position of the steering gear box is displaced in the axial direction relative to the panel, there is a risk that reliable waterproof performance cannot be achieved. In addition, the size of the hole cover is relatively large in accordance with the distance between the panel and the boss of the steering gear box, and the hole cover inevitably takes a curved shape due to the difference between the angle of the panel and the angle of the boss.

### Disclosure of the Invention

The present invention has been made in view of the above-described circumstances. An object of the present invention is to provide a hole cover with which improvement in the assembling operationality is realized.

To achieve the above-described object, according to a first aspect of the present invention, there is provided a hole cover for a vehicle, for covering an opening on a panel through which a steering element is to pass, comprising an elastic seal portion having a steering penetration portion through which said steering element passes and being in close contact with a sealing surface formed on the edge of the opening of said panel, and a plurality of latch projections adapted to be pressed against said panel substantially along the axis of said steering element so as to be caught in a latch recess formed in the vicinity of said edge of the opening.

According to a second aspect of the present invention, there is provided a hole cover for a vehicle, for covering an opening on a panel through which a steering element is to pass, comprising an elastic seal portion having a steering penetration portion through which said steering element passes and being in close contact with a sealing surface formed on the edge of the opening of said panel, and a latch recess adapted to be pressed against said panel substantially along the axis of said steering element so that a plurality of latch projections formed in the vicinity of said edge of the opening are caught in the latch recess.

In the present invention, for example, when the hole cover is slid along the steering shaft so as to be pressed against the steering opening, the latch projections are caught in the latch recess, so that mounting of the hole cover is completed.

The hole cover according to the present invention may be constructed in such a way that when said latch projections are caught in said latch recess, at least one of sound and vibration is produced. With this feature, the operating engineer can recognize when the hole cover is mounted, visually or aurally.

The hole cover according to the present invention may be constructed in such a way that said elastic sealing portion is in contact with a sealing surface having a circular shape, and said latch projections are caught in said latch recess having an annular shape. With this feature, the operating engineer can carry out the hole cover mounting operation without effecting positioning of the hole cover and the steering opening with respect to the rotational direction.

In the hole cover according to the present invention, said steering penetration portion may be in sliding contact with said steering element in a rotational direction. With this feature, the hole cover can be made as a relatively small disk-like member if the steering penetration portion is disposed in the vicinity of the steering opening.

The hole cover according to the present invention may include an elastic deforming portion that allows movement of said steering penetration portion relative to said elastic seal portion. With this feature, positional displacement or vibration of the steering element can be absorbed by deformation of the elastic deforming portion.

In the hole cover according to the present invention, said elastic seal portion may be formed on a seal body made of an elastic material, and said latch projection or said latch recess may be formed on a seal retaining member that is externally fitted on the seal body. With this feature, the operating engineer can carry out mounting of the hole cover by pressing the seal body and the seal retaining member externally fitted on the steering shaft to the steering opening sequentially or simultaneously.

In the hole cover according to the present invention, a retaining member bias means for biasing said seal retaining member in a direction away from said panel may be formed on said seal body. With this feature, the latch projections and the latch recess are in pressure contact with each other by the biasing force exerted by the retaining member bias means, and rattling noise that may caused by vibration can be suppressed.

In the hole cover according to the present invention, said latch projection may be exposed in the assembled state. In this case, the operating engineer can recognize the mounting state of the hole cover visually.

According to the present invention, there is also provided a hole cover for a vehicle, for covering an opening on a panel through which a steering element is to pass, comprising an elastic seal portion having a steering penetration portion through which said steering element passes and being in close contact with a sealing surface formed on the edge of the opening of said panel, and a latch member adapted to be pressed against said panel substantially along the axis of said steering element.

### Brief Description of the Drawings

Fig. 1 is a side view showing the cabin side portion of a steering apparatus according to an embodiment of the present invention.
Fig. 2 is an exploded perspective view showing a cover holder barrel and a hole cover in the embodiment.
Fig. 3 is a half cross sectional side view showing a mounting state of the hole cover on the cover holder barrel.
Fig. 4 is an enlarged view showing portion A in Fig. 3.
Fig. 5 is an enlarged view showing portion B in Fig. 3.
Fig. 6 illustrates a process of mounting the hole cover.

### Embodiment of the Invention

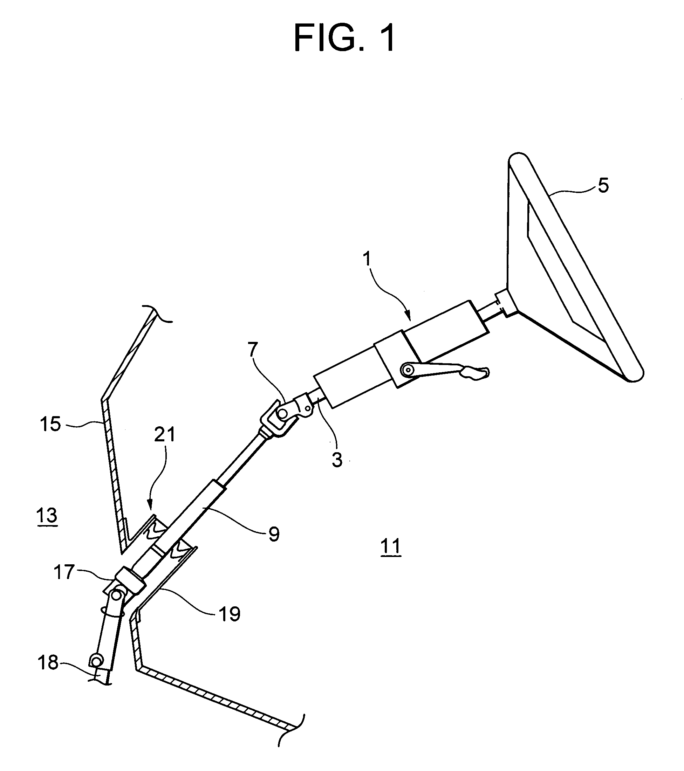

In the following, an embodiment of the hole cover according to the present invention will be described. Fig. 1 is a perspective view showing the cabin side portion of a steering apparatus according to the embodiment. The member designated by reference character 1 in Fig. 1 is a steering column, which rotatably supports an upper steering shaft 3. On the upper end of the upper steering shaft 3, a steering wheel 5 is attached, and an intermediate steering shaft 9 is connected to the lower end of the upper steering shaft 3 via a universal joint 7.

The intermediate shaft 9 passes through a panel 15 by which the vehicle's cabin 11 and the engine room 13 are partitioned, and its lower end is connected with a lower steering shaft 18 via a universal joint 17. In Fig. 1, the member designated by reference character 19 is a cover holder barrel that constitutes the penetration portion for the intermediate shaft 9. The cover holder barrel 19 is fixed on the dash panel 15 in such a way as to project to the cabin 11 side.

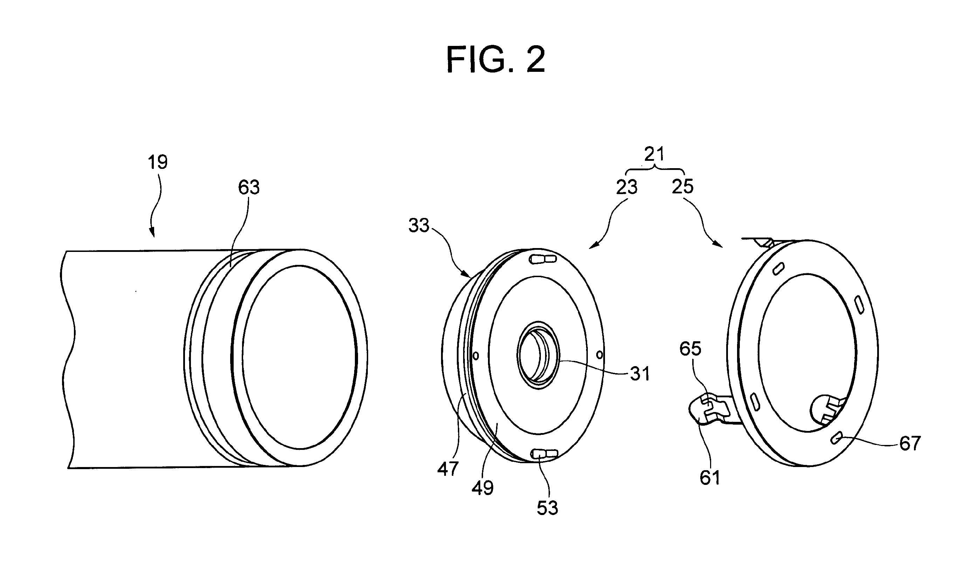

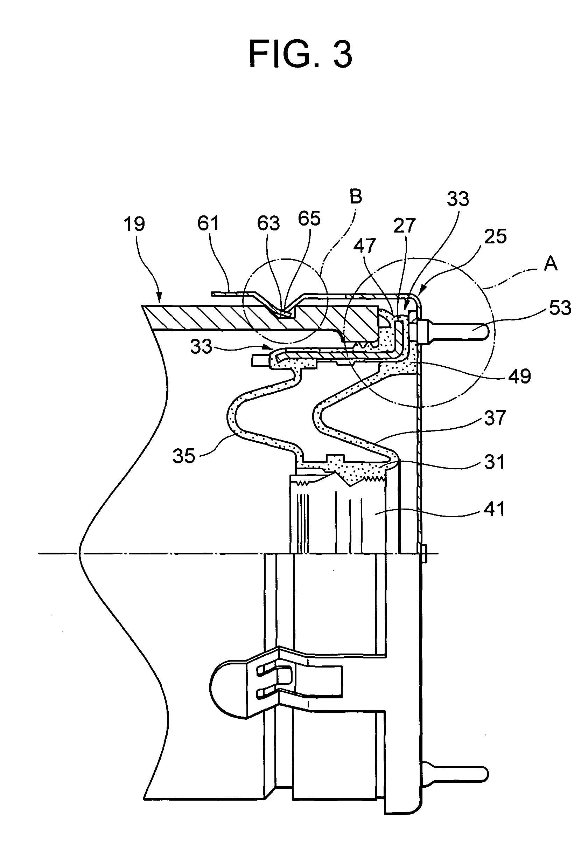

A hole cover 21 is attached to the upper end of the cover holder barrel 19. Fig. 2 is an exploded perspective view showing the cover holder barrel 19 and the hole cover 21. Fig. 3 is an enlarged half cross sectional side view showing the state in which the hole cover 21 is attached to the cover holder barrel 19. As shown in Figs. 2 and 3, the hole cover 21 according to this embodiment is composed of a disk-like seal body 23 produced by molding a synthetic rubber and a circular seal retaining ring (or a seal retaining member) 25. As shown in Fig. 3, an annular metal stiffener 27 is integrally formed in the seal body 23.

On the seal body 23, a steering penetration cylinder (or a steering penetration portion) 31 having a cylindrical shape through which the intermediate shaft 9 is to pass is formed at the center thereof, and a sealing cylinder 33 also having a cylindrical shape to be fitted into the end portion (or the edge of the opening) of the cover holder barrel 19 is formed on the outer periphery thereof. The steering penetration cylinder 31 and the sealing cylinder 33 are joined by paired first and second elastic deforming rings (deforming portions) 35 and 37 each having a substantially V-shaped cross section, so that they can be displaced relative to each other in the radial direction within a certain range.

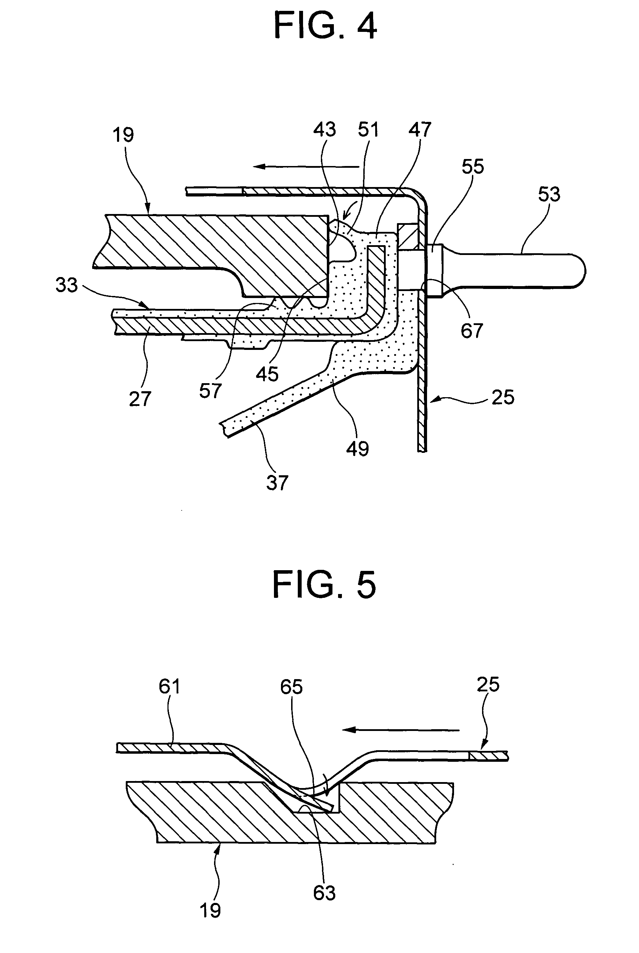

The inner circumference of the penetration cylinder 31 is formed as an elastic sealing surface 41 to be in sliding contact with the intermediate shaft 9. As shown in Fig. 4, the sealing cylinder 33 includes a first flange portion 47 having an elastic sealing surface 45 in contact with a sealing surface 43 of the cover holding barrel 19 and a second flange portion 49 in close contact and integrated with the first flange portion 47. The aforementioned second elastic deforming ring 37 is integrally joined with the second flange portion 49. In this embodiment, the first flange portion 47 and the second flange portion 49 are constructed as separate members for reasons of molding (to form a space between the first and second elastic deforming rings 35 and 37).

As shown in Fig. 4, which is an enlarged view showing portion A in Fig. 3, an annular lip for assembling 53 is provided outside the elastic sealing surface 45 on the first flange portion 47. The lip 51 is in elastic contact with the sealing surface 43. On the rear surface (i.e. the right side surface in Fig. 3) of the first flange 47, a pair of projections for assembling 53 that penetrate the second flange portion 49 and the seal retaining ring 25 are provided at intervals of 180°. The projection for assembling 53 has a securing portion 55 formed on its base end side. The securing portion 55 secures the second flange portion 49 and the seal retaining ring 25. As shown in Fig. 4, annular waterproof lips 57 are formed on the outer circumferential surface of the sealing cylinder 33. The waterproof lips 57 are in elastic contact with the inner circumferential surface of the cover holder barrel 19. Although two waterproof lips 57 are provided in this embodiment, the number of the waterproof lips 57 may be one or more than two.

On the seal retaining ring 25, there is provided three holding tongues 61 projecting toward the front side (toward the left in Fig. 3) at intervals of 120°. As shown in Fig. 5 (an enlarged view showing part B in Fig. 3), latch claws (latch projections) 65 to be caught in an annular groove (a latch recess) 63 formed on the outer circumferential surface of the cover holder barrel 19 are integrally formed on the respective holding tongues 61. The seal retaining ring 25 has four elongated holes 67 formed at intervals of 90°.

In the following, the operation of this embodiment will be described.

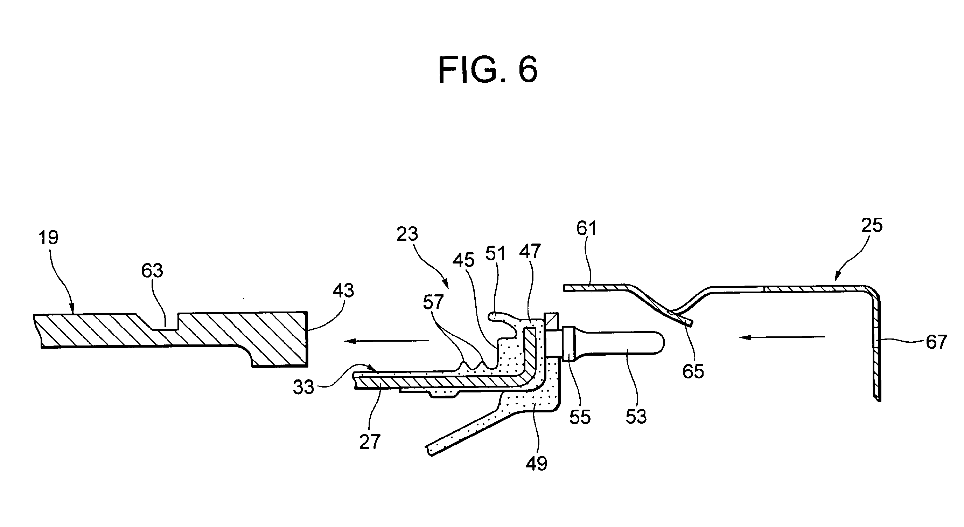

In mounting the steering apparatus on the vehicle body, the operating engineer inserts the intermediate shaft 9, on which the seal body 23 and the seal retaining ring 25 have been assembled in advance, into the cover holder barrel 19 from the cabin 11 side. Next, the operating engineer connects the intermediate shaft 9 with the lower steering shaft 18, and then mounts the seal body 23 and the seal retaining ring 25 sequentially on the cover holder barrel 19, as shown in Fig.6.

When the seal body 23 is fitted in the cover holder barrel 19 by the operating engineer, the waterproof lips 57 of the sealing cylinder 33 is internally fitted into and comes in elastic contact with the inner circumferential surface of the cover holder barrel 19. In addition, the lip for assembling 51 of the first flange portion 47 comes in contact with the sealing surface 43 of the cover holder barrel 19. The elastic sealing surface 45 and the sealing surface 43 of the cover holder barrel 19 have not come to contact with each other at this stage.

Next, when the seal retaining ring 25 is externally fitted on the cover holder barrel 19 by the operating engineer, the seal body 23 is biased by the seal retaining ring 25 and pressed against the cover holder barrel 19. In addition, the latch claws 65 of the holding tongues 61 are caught in the annular groove 63. In this process, the operating engineer causes the projection for assembling 53 to pass through an elongated hole 67 of the seal retaining ring 25, and then pulls the projection for assembling 53 backwardly while holding the seal retaining ring 25. Thus, the seal retaining ring 25 is secured by the securing portion 55 of the projection for assembling 53, as shown in Fig.4 so that the seal body 23 and the seal retaining ring 25 are made integral.

In this embodiment, in the state in which the latch claws 65 of the holding tongues 61 are caught in the annular groove 63, the first flange portion 47 of the sealing cylinder 33 is pressed by the seal retaining ring 25 so as to be compressed along the axial direction, so that the elastic sealing surface 45 comes in close contact with the sealing surface 43 of the cover holder barrel 19. In addition, the latch claws 65 are pressed against the rear face (the right end face in Fig. 5) of the annular groove 63 at a certain pressing force by virtue of an elastic force of the lip for assembling 51. When the latch claws 65 are caught in the annular groove 63, the latch claws 65 impinge against the bottom of the annular groove 63 to produce sound and vibration, which tell the operating engineer of completion of the mounting of the hole cover 21.

As described in the foregoing, in this embodiment, the cylindrical steering penetration cylinder 31 through which the intermediate shaft 9 is to pass is provided at the central portion of the seal body 23, and so it is possible to construct the hole cover 21 as a relatively small disk-like member. Thus, a reduction in the manufacturing cost and the weight can be realized. In addition, since the latch claws 65 of the seal retaining ring 25 are adapted to be caught in the annular groove 63, positioning of the hole cover 21 with respect to the rotational direction is no required. Thus, the operationality is greatly improved. Furthermore, since in the seal body 23, the steering penetration cylinder 31 and the sealing cylinder 33 are joined by the first and second elastic deforming rings 35 and 37 having elasticity, the closeness of the contact between the intermediate shaft 9 and the elastic sealing surface 41 is not decreased even if misalignment of the central axis of the intermediate shaft 9 with the center of the hole cover 21 occurs or the intermediate shaft 9 vibrates during rotation. Therefore, the waterproof and dustproof performance of the hole cover 21 is not deteriorated. Still further, since the waterproof lips 57 are in elastic contact with the inner circumferential surface of the cover holder barrel 19, the sealing performance can be ensured even when the seal body 23 is displaced along the axial direction.

Although a specific embodiment has been described in the foregoing, modes of the present invention are not limited to the above-described embodiment. For example, although in the above-described embodiment, the cover holder barrel on which the hole cover is mounted is provided in such a way as to project to the cabin, it may project to the engine room. Alternatively, the hole cover may be directly mounted on the panel without using the cover holder barrel. Furthermore, although the latch claws (latch projections) on the seal retaining ring (panel) are adapted to engage the annular groove (latch recess) on the cover holder barrel in the above-described embodiment, this arrangement may be modified in such a way that a latch projection provided on the panel side is adapted to engage a latch recess provided on the hole cover side. Still further, although in the above-described embodiment, the seal body and the seal retaining ring are mounted sequentially, the seal body and the seal retaining ring may be coupled in advance, or the seal body and the seal retaining ring may be constructed as an integral part. Although in the above-described embodiment, the cover holder barrel (or the edge of the panel opening) and the hole cover have circular cross sections, their cross section may be polygonal or elliptical. In addition, the material of the seal body and the seal retaining ring, that is, a rubber and a steel plate, may be replaced by a synthetic resin and a metal plate other than the steel plate. Furthermore, the specific structure of the hole cover and the shape of the constituent parts may be modified as needed without departing from the spirit of the present invention.

As per the above, according to the hole cover of the present invention, when the hole cover is slid along the steering shaft so as to be pressed against the steering opening, the latch projections are caught in the latch recess, so that mounting of the hole cover is completed.

## Claims

1. A hole cover for a vehicle, for covering an opening on a panel through which a steering element is to pass, comprising:
an elastic seal portion having a steering penetration portion through which said steering element passes and being in close contact with a sealing surface formed on the edge of the opening of said panel; and
a plurality of latch projections adapted to be pressed against said panel substantially along the axis of said steering element so as to be caught in a latch recess formed in the vicinity of said edge of the opening.

2. A hole cover for a vehicle, for covering an opening on a panel through which a steering element is to pass, comprising:
an elastic seal portion having a steering penetration portion through which said steering element passes and being in close contact with a sealing surface formed on the edge of the opening of said panel; and
a latch recess adapted to be pressed against said panel substantially along the axis of said steering element so that a plurality of latch projections formed in the vicinity of said edge of the opening are caught in the latch recess.

3. A hole cover for a vehicle according to claim 1 or 2, wherein when said latch projections are caught in said latch recess, at least one of sound and vibration is produced.

4. A hole cover for a vehicle according to claim 1 or 2, wherein said elastic sealing portion is in contact with a sealing surface having a circular shape, and said latch projections are caught in said latch recess having an annular shape.

5. A hole cover for a vehicle according to claim 1 or 2, wherein said steering penetration portion is in sliding contact with said steering element in a rotational direction.

6. A hole cover for a vehicle according to claim 1 or 2, further comprising an elastic deforming portion that allows movement of said steering penetration portion relative to said elastic seal portion.

7. A hole cover for a vehicle according to claim 1 or 2, wherein said elastic seal portion is formed on a seal body made of an elastic material, and said latch projection or said latch recess is formed on a seal retaining member that is externally fitted on the seal body.

8. A hole cover for a vehicle according to claim 7, wherein a retaining member bias means for biasing said seal retaining member in a direction away from said panel is formed on said seal body.

9. A hole cover for a vehicle according to claim 1 or 2, wherein said latch projection is exposed in the assembled state.

10. A hole cover for a vehicle, for covering an opening on a panel through which a steering element is to pass, comprising:
an elastic seal portion having a steering penetration portion through which said steering element passes and being in close contact with a sealing surface formed on the edge of the opening of said panel; and
a latch member adapted to be pressed against said panel substantially along the axis of said steering element.
